# EUROPÄISCHE PATENTSCHRIFT

(11) **EP 1 053 267 B1**
(45) Veröffentlichungstag und Bekanntmachung des Hinweises auf die Patenterteilung: **17.09.2003**
(21) Anmeldenummer: 99934213.2
(22) Anmeldetag: 26.01.1999
(51) Int. Cl.: C08F 287/00, C08F 279/02, B01J 19/18

(54) **KONTINUIERLICHES VERFAHREN ZUR HERSTELLUNG THERMOPLASTISCHER FORMMASSEN**
METHOD FOR THE CONINUOUS PRODUCTION OF THERMOPLASTIC MOULDING MATERIALS
PROCEDE CONTINU DE PRODUCTION DE MATIERES DE MOULAGE THERMOPLASTIQUES

(30) Priorität: 07.02.1998 DE 19804912
(43) Veröffentlichungstag der Anmeldung: 22.11.2000
(73) Patentinhaber: BASF AKTIENGESELLSCHAFT, 67056 Ludwigshafen (DE)
(72) Erfinder: Fischer, Wolfgang, 69190 Walldorf (DE); Büchner,Eugen-Walter, 67069 Ludwigshafen (DE); Deimling, Axel, 67434 Neustadt (DE); Gausepohl, Hermann, 67112 Mutterstadt (DE); Schade, Christian, 67061 Ludwigshafen (DE)
(86) Internationale Anmeldenummer: EP9900469
(87) Internationale Veröffentlichungsnummer: WO99040136

(56) Entgegenhaltungen:
- EP-A- 0 595 121
- EP-A- 0 648 790
- WO-A-96/25442
- DE-A- 19 648 245
- DE-A- 19 701 865
- US-A- 3 957 914
- US-A- 4 061 849
- US-A- 4 153 647

## Beschreibung

Die Erfindung betrifft ein kontinuierlich durchführbares Verfahren zur Herstellung von schiagzäh modifizierten Styrolpolymeren (HIPS), die einen teilchenförmigen, durch Pfropfung mit Styrol verträglich gemachten Polybutadienkautschuk oder ein Styrol-Butadien-Blockcopolymerisat als disperse Phase in einer Polystyrolmatrix enthalten, durch anionische Polymerisation von Styrol in einem oder mehreren hintereinandergeschalteten Polymerisationsreaktoren in Gegenwart eines in einem unmittelbar vorgeschalteten Verfahren hergestellten Kautschuks und vorzugsweise in Gegenwart einer untergeordneten Menge eines von Styrol verschiedenen alkylaromatischen Lösungsmittels, insbesondere Toluol, Ethylbenzol oder Gemischen aus Toluol und Ethylbenzol.

Meist wird schlagzähes Polystyrol radikalisch durch Polymerisation in Masse hergestellt, wobei der - in einem unabhängigen Verfahren gewonnene - Kautschuk im Styrol gelöst wird. Zusätzlich wird meist eine geringe Menge eines Lösungsmittels wie Ethylbenzol verwendet. Die Polymerisation wird technisch in mehreren hintereinander angeordneten Reaktoren, einer sog. Kaskade vorgenommen. Derartige Verfahren sind beispielsweise bei Echte, Handbuch der Technischen Polymerchemie, Weinheim 1993 zusammengestellt; spezielle Anordnungen sind z.B. in den US-Patentschriften 2 727 884 oder 3 903 202 beschrieben.

Es ist auch vorgeschlagen worden, schlagzähes Polystyrol durch anionische Polymerisation herzustellen. Dies könnte z.B. in Rohrreaktoren geschehen, wobei die Polymerisationswärme durch die Wand abgeführt würde. Zu diesem Zweck würden in den Rohrquerschnitt sog. statische Mischer eingebaut, die die radiale Durchmischung des Polymerisats fördern (Nguyen Khac Tien et al. Chem. Eng. Technol. 13, 214-220 (1990). Ein solches Verfahren hat sich aber nicht durchsetzen können.

Kautschuke wie Polybutadien werden üblicherweise in Lösung hergestellt. Hierzu wird auf die zusammenfassende Darstellung in Encyclopedia of Polymer Science and Technology Vol. 2, N.Y. 1985 verwiesen.

Bei anionischer Polymerisation, wie sie zur Herstellung von sog. Blockkautschuken (Styrol-Butadien-Blockcopolymerisaten) angewendet wird, ist auf jeden Fall ein Lösungsmittel notwendig (EP-A-510 410; EP-A-554 142; US 5 286 457).

Der Nachteil der bekannten Verfahren zur Herstellung von schlagzähem Polystyrol besteht darin, daß der Kautschuk zunächst aus seinem Reaktionsgemisch (d.h. einer aus technischen Gründen i.a. höchstens 15 bis 20 %igen Lösung) isoliert werden muß, wenn er zur Schlagzähmodifizierung eingesetzt werden soll.

Es ist schon versucht worden, technisch gangbare Verfahren zu finden, die die kostspielige Isolierung des Kautschuks überflüssig machen.

So wird in der europäischen Patentanmeldung 334 715 ein Verfahren zur radikalisch gestarteten Styrolpolymerisation vorgeschlagen, bei dem zunächst Polybucadien anionisch in Ethylbenzol in einem Rührkessel hergestellt wird. Nach Abbruch soll mit vorgewärmtem Styrol verdünnt und dann polymerisiert werden. Wegen der für die Kautschukherstellung notwendigen Menge an (hochsiedendem) Lösungsmittel, die gewichtsmäßig ungefähr 40-100% der später hinzugefügten Styrolmenge entsprechen müßte, ließe sich aber auch dieses Verfahren nicht wirtschaftlich betreiben.

In der britischen Patentschrift 1 013 205 wird daher vorgeschlagen, zunächst Butadien in einem relativ niedrig siedenden Lösungsmittel, nämlich Cyclohexan zu polymerisieren, die Lösung mit Styrol zu versetzen und zu fraktionieren, indem das Cyclohexan zusammen mit dem etwa verbliebenen Butadienmonomer abdestilliert wird. Die nunmehr erhaltene Lösung des Kautschuks in Styrol soll dann wie üblich bei der Styrolpolymerisation verwendet werden. Dieses an sich elegante Verfahren hat sich wohl deshalb nicht in die Praxis einführen können, weil - darauf weist die britische Patentschrift hin - das Cyclohexan in einem zusätzlichen Verfahrensschritt entfernt werden müßte, um die Polymerisation mit einer hinreichend hohen Monomerkonzentration durchzuführen.

Diese Überlegungen gelten natürlich auch für einen anionischen Polymerisationsprozeß zur Herstellung von schlagfestem Polystyrol. Andererseits könnte ein Kautschuk, der aus seiner Lösung isoliert wurde, aufgrund der bei der Isolierung hinzugefügten Hilfsstoffe ohnehin kaum für eine kontinuierliche anionische Polymerisation infragekomen. Wahrscheinlich hat sich u.a. aus diesem Grunde die Herstellung von schlagfestem Polystyrol durch anionische Polymerisation nicht in technischem Umfang einführen können, obwohl sie an sich den Vorteil hätte, praktisch monomerenfreies Polystyrol zu liefern.

In der Europäischen Patentveröffentlichung 059 231 sind die Nachteile des Verfahrens der britischen Patentschrift 1 013 205 anschaulich beschrieben. Es wird dann ein Verfahren vorgeschlagen, bei dem zunächst Styrol und Butadien auf anionischem Wege in einem Rührkessel, d.h. unter Rückvermischung, zu einem Styrol-Butadien-Blockcopolymerisat verarbeitet werden. Dabei wird die Umsetzung so geleitet, daß schließlich ein butadienhaltiges Reaktionsgemisch erhalten wird. Die lebenden Ketten werden mit einem Abbruchmittel (Quenchmittel) behandelt, anschließend wird das überschüssige, monomere Butadien entfernt. Dann wird Styrol zugesetzt und radikalisch polymerisiert. Auch dieses Verfahren ist unwirtschaftlich, da hier überschüssiges Butadien in einem separaten Schritt abgetrennt werden müßte, um Störungen der Styrolpolymerisation zu vermeiden.

Die EP-A 0 595 121 beschreibt ein kontinuierliches Verfahren zur anionischen Polymerisation von Styrol in Gegenwart eines Lösungsmittels, z.B. Toluol und eines Blockkautschukes in einer Reaktionskaskade mit Aufteilung des Monomerenstromes.

Die US 4,153,647 beschreibt ebenfalls die anionische Polymerisation von Styrol in Gegenwart eines Kautschukes in einem aliphatischen, cycloaliphatischen oder aromatischen Lösungsmittel. Am Ende der Polymerisation wird das Lösungsmittel abdestilliert.

Ein zyklisches Verfahren zur anionischen Lösungspolymerisation von beispielsweise Styrol-Butadien-Blockcopolymeren und deren Hydrierung wird in US 3,957,914 beschrieben. Nach Fällung des hydrierten Polymeren mit Dampf wird die lösungsmittelhaltige Phase fraktioniert destilliert und das gereinigt Lösungsmittel für die anionische Polymerisation zurückgeführt. Der zur Terminierung des Blockcopolymeren verwendete Protonendonor besitzt einen Siedepunkt von mindestens 40°C über dem Siedepunkt des Lösungsmittels.

Zusammenfassend läßt sich sagen, daß alle bisher beschriebenen Verfahren zur Herstellung von schlagzähem Polystyrol entweder zusätzliche Verfahrensschritte zur Entfernung von Lösungsmittel oder Restmonomeren aus der Kautschuksynthese aufweisen oder auf zuvor isolierten Kautschuk angewiesen sind. Die Herstellung von schlagzähem Polystyrol in technischem Maßstab auf rein anionischem Weg ist insgesamt ein ungelöstes Problem.

Aufgabe der Erfindung war es deshalb, ein wirtschaftliches Verfahren zur Herstellung von schlagzähem Styrol (HIPS) auf rein anionischem Weg unter Vermeidung der Nachteile der bekannten Verfahren anzugeben, das ohne Zwischenisolierung des Kautschuks aus seiner Lösung auskommt. Eine weitere Aufgabe der Erfindung war es, ein Verfahren zur anionischen Polymerisation anzugeben, das weitgehend in Anlagen benutzt werden kann, die bereits für die radikalische Herstellung von schlagzähem Polystyrol vorhanden sind.

Das erfindungsgemäße Verfahren weist wenigstens einen Lösungsmittelkreislauf und, vereinfacht gesprochen, als wesentliches Merkmal auf, daß der benötigte Kautschuk der Anlage zur Styrolpolymerisation als Lösung in einem - von Styrol und Ethylbenzol verschiedenen und niedriger als Styrol bzw. Ethylbenzol siedenden - Drittlösungsmittel zugeführt wird und daß zumindest ein Teil dieses Drittlösungsmittels aus mindestens einem der Polymerisationsreaktoren durch Destillation entfernt und zurückgeführt wird, wobei vorteilhafterweise mindestens ein Teil der benötigten Verdampfungsenergie im Wege der Siedekühlung durch die anfallende Polymerisationswärme aufgebracht wird.

Ein zweiter Lösungsmittelkreislauf ergibt sich dadurch, daß in an sich bekannter Weise das gebildete Polymerisat, d.h. das schlagzähe Polystyrol "entgast", d.h. von allenfalls verbliebenem restlichem Monomeren und dem begleitenden Lösungsmittel (das sind üblicherweise eingeschlepptes Ethylbenzol und Toluol sowie Reste des erfindungsgemäßen Drittlösungsmittels) befreit, der gebildete Brüdenstrom kondensiert und - wenn lohnend - direkt oder nach entsprechender Aufarbeitung in die Anlage zurückgeführt wird.

Unmittelbarer Erfindungsgegenstand ist ein Verfahren der eingangs genannten Art, in dem erfindungsgemäß wenigstens ein Lösungsmictelkreislauf vorgesehen ist, wobei der Kautschuk als Lösung in einem von Styrol und gegebenenfalls alkylaromatischem Lösungsmittel verschiedenen Drittlösungsmittel eingesetzt wird, das einen niedrigeren Siedepunkt als Styrol bzw. alkylaromatisches Lösungsmittel aufweist und das Drittlösungsmittel in einem (ersten) Lösungsmittelkreislauf unter Ausnutzung der Polymerisationswärme aus mindestens einem der Polymerisationsreaktoren durch Destillation unter Siedekühlung entfernt und - gegebenenfalls nach entsprechender Aufarbeitung, d.h. direkt oder indirekt - dem unmittelbar vorgeschalteten Verfahren zur Kautschukherstellung zugeführt wird und wobei in an sich bekannter Weise das gebildete schlagzähe Polystyrol vom restlichen Styrol und gegebenenfalls Begleitstoffen befreit, der gebildete Brüdenstrom kondensiert und gegebenenfalls in einem zweiten Lösungsmittelkreislauf -wiederum bei Bedarf nach entsprechender Aufarbeitung - ebenfalls zurückgeführt wird. Bevorzugt wird als alkylaromatisches Lösungsmittel Ethylbenzol eingesetzt.

Der erfindungsgemäß verwendbare Kautschuk muß bekanntlich ein Kautschuk sein, der von sich aus mit Polystyrol in der für teilchenförmige Pfropfkautschuke typischen Weise verträglich ist, da bei der anionischen Polymerisation keine Pfropfung stattfindet. Dies kann ein sog. SB-Kautschuk (Styrol/Butadien-Kautschuk), ein Styrol/Butadien-Blockkautschuk oder ein Gemisch aus styrölfreiem oder styrolarmem Butadienkautschuk und einem Styrol/Butadien-Blockkautschuk sein, der diskontinuierlich oder vorzugsweise ebenfalls kontinuierlich hergestellt wird.

Als erfindungsgemäßes Drittlösungsmittel können aliphatische, cycloaliphatische oder aromatische Kohlenwasserstoffe mit 4 bis etwa 8 Kohlenstoffatomen oder deren Gemische mit einer Siedetemperatur (KP_{1013hP}) von unter 130°C eingesetzt werden. Geeignet sind zum Beispiel Pentan, Hexan, Heptan, Cyclohexan oder Methylcylohexan, Benzol oder Toluol. Wesentlich ist, daß dieses Drittlösungsmittel die üblichen Voraussetzungen zur Verwendung bei der anionischen Polymerisation erfüllt, insbesondere frei von protischen Substanzen und Sauerstoff ist. Es wird zweckmäßig vor der Verwendung destilliert und über Aluminiumoxid oder Molekularsieb getrocknet.

Die Anlage zur Herstellung des Kautschuks wird nachstehend auch als Reaktionszone 1 bezeichnet, während als Reaktionszone 2 ein erster, i.a. als Rührkessel ausgebildete Reaktor und gegebenenfalls ein weiterer, ebenfalls als Rührkessel ausgebildeter Reaktor bezeichnet wird. Der oder die von der radikalischen Polymerisation her bekannten weiteren Reaktoren, z.B. Turmreaktoren zur Vervollständigung des Umsatzes, in denen sich eine Pfropfenströmung ausbildet, wären einer Reaktionszone 3 zuzurechnen. Als Reaktionszone 4 wird der in Anlagen zur Styrolpolymerisation übliche Anlagenteil bezeichnet, der zur Entgasung und Gewinnung des Polymeren dient.

Dem ersten Kessel der Reaktionszone 2 wird mindestens die Styrolmenge zugeführt, die bei vollständiger Polymerisation zur Erreichung der Phaseninversion benötigt wird. Das durch die freigesetzte Polymerisationswärme verdampfende Monomer/Lösungsmittelgemisch wird einer dem Kessel zugeordneten Rektifikationskolonne mit Rückflußkühler zugeführt. Reicht im Einzelfall ausnahmsweise die Polymerisationswärme zur Verdampfung der gewünschten Lösungsmittelmenge nicht aus, so können der Reaktor und/oder die Zuläufe auch zusätzlich beheizt werden. Das Lösungsmittel wird über Kopf der Rektifikationskolonne abgezogen und der Kautschukherstellung zugeführt, während der Sumpf in den Reaktor zurückgeführt wird. Es ist möglich, falls ein zweiter Reaktor vorgesehen und ebenfalls als Rührkessel ausgebildet ist, auch dort Lösungsmittel abzutrennen, die entstandenen Brüden gegebenenfalls einer einzigen Kolonne zuführen, und das Sumpfprodukt entweder in den ersten Reaktor oder unmittelbar zur Kautschukherstellung zurückzuführen.

Wenn vorstehend von Styrol bzw. Butadien gesprochen wird, so sind auch die üblichen jeweiligen technischen Äquivalente gemeint. Für Styrol stehen z.B. 2-, 3- oder 4-Methylstyrol, tert.-Butylstyrol, Ethylstyrol oder α-Methylstyrol oder andere Substitutionsprodukte von Styrol mit ähnlichem Polymerisationsverhalten ("vinylaromatische Verbindungen"). Als Monomere zur Herstellung des Kautschuks eignen sich (außer Styrol bzw. Butadien) andere Diene oder Kombinationen aus Dienen und vinylaromatischen Verbindungen. Als Beispiele für andere Diene seien Isopren, Dimethylbutadien, Pentadien-1,3 oder Hexadien-1,3 genannt.

Das erfindungsgemäße Verfahren wird zweckmäßig derart durchgeführt, daß für die Kautschukherstellung mindestens ein Lösungsmittel verwendet wird, das einen Siedepunkt - jeweils bei atmosphärischem Druck - unter 130, bevorzugt unter 120°C und für die HIPS-Herstellung, wenn dies gewünscht wird, ein Lösungsmittel, das einen Siedepunkt über 120 bzw. 130°C hat. Besonders günstig wird Toluol zur Kautschuksynthese verwendet. In diesem Fall entfernt man zweckmäßig nur einen Teil des Toluols während der Polymerisation des Styrols. Der verbleibende Rest wird bei der Entgasung entfernt und kann je nach Zusammensetzung der Brüden sowohl der Kautschukherstellung als auch der Styrolpolymerisation zugeführt werden.

Bei erfindungsgemäßer Anwendung der Siedekühlung entspricht die sich einstellende Temperatur der Reaktionszone 2 der Siedetemperatur des Gemisches aus Monomerem und - niedrigsiedendem - Drittlösungsmittel. Das Verfahren kann natürlich auch bei einem anderen als atmosphärischem Druck durchgeführt werden, z.B. vermindertem oder überatmosphärischem Druck. Geeignet ist z.B. ein Druckbereich von 0,1 bis 5 bar. Das relative Siedeverhalten der Lösungsmittel, auf das es hier ankommt, wird davon in der Regel nicht besonders beeinflußt.

Bei der HIPS-Herstellung ist üblicherweise eine geringe Menge eines für die Styrolpolymerisation üblichen aromatischen Lösungsmittels zugegen, das bei der Styrolherstellung nicht vollständig abgetrennt wird und sich bis zu einem gewissen Mengenanteil im Reaktionsgemisch aufzupegeln pflegt. Es handelt sich dabei um Alkylbenzole entsprechenden Siedepunktes wie Xylole (Kp_{1013hP}: =140°C) und insbesondere Ethylbenzol (Kp_{1013hP}: 136°C). Um eine unerwünscht hohe Aufpegelung zu verhindern, kann es sinnvoll sein, diese Alkylbenzole teilweise auszuschleusen, indem ständig ein aliquoter Teil des Lösungsmittels aus dem Kreislauf entfernt und einer Aufarbeitung-zugeführt wird. Geringe Mengen an solchen Lösungsmittelresten können auch einer Heizung o.ä. zugeführt werden, je nachdem, was sich als wirtschaftlich erweist.

Wenn Styrol verfügbar ist, das kein Ethylbenzol enthält, ist es nicht erforderlich, Ethylbenzol zuzusetzen, da es von dem erfindungsgemäßen Drittlösungsmittel ersetzt werden kann. Das nicht umgesetzte Styrol kann die erfindungsgemäße Aufgabe der Siedekühlung mit übernehmen, je nach dem beabsichtigten Umsatz und der noch beherrschbaren Viskosität der Lösung.

5 Die zweite Reaktionszone, in der erfindungsgemäß ein mindestens teilweiser Umsatz stattfinden soll, kann durchgehend als rückvermischende Einheit (Einheit mit Rührkesselverhalten) ausgebildet sein und weist erfindungsgemäß einen Rührkessel mit zugeordneter Kolonne mit Wärmetauscher auf, in dem die im Kessel verdampften Bestandteile fraktioniert werden, wobei die höher siedende Fraktion in die zweite Reaktionszone zurückgeführt wird und die niedriger siedende Fraktion der Kautschukherstellung, d.h. der ersten Reaktionszone zugeführt wird. Die zweite Reaktionszone kann erfindungsgemäß auch aus mehreren Rührkesseln und zugeordneten Kolonnen bestehen. Das Kopfprodukt kann dem jeweils vorgeschalteten Reaktor zugeführt werden.

Erfindungsgemäß werden somit das bzw. die Lösungsmittel sowie Teile des in jedem Fall noch vorhandenen, nicht umgesetzten Styrols in der zweiten Reaktionszone gemeinsam abdestilliert, jedoch fraktioniert und an der jeweils infragekommenden Stelle des Verfahrensablaufs wiedereingesetzt.

Das Gewicht an zugesetztem Styrol beträgt i.a. mindestens das dreifache des Kautschuk- d.h. Blockcopolymeren-Gewichts. Die Mischung wird in an sich bekannter Weise anionisch, gegebenenfalls in Gegenwart von Zusätzen polymerisiert, die die Reaktionsgeschwindigkeit herabsetzen, wie Mg- oder Al-organischen Verbindungen. Die Polymerisationswärme wird erfindungsgemäß im wesentlichen durch Siedekühlung abgeführt, sodaß sich eine der Zusammensetzung der flüchtigen Bestandteile des Reaktionsgemisches entsprechende Polymerisationstemperatur einstellt, also z.B. zwischen 70°C und 180°C, je nach dem herrschenden Druck, der z.B. 0,1 bis 10 bar betragen kann. Man strebt i.a. - je nach Lösungsmittelanteil und Polymerisationsverfahren - einen Umsatz von 70 bis 100 % an. Bevorzugt wird bis zu einem Umsatz von 95% oder mehr und, wenn die apparativen Voraussetzungen bestehen, bis zu praktisch vollständigem Umsatz polymerisiert. Zu diesem Zweck wird das aus dem letzten Rührkessel erhaltene Reaktionsgemisch in mindestens einem weiteren Reaktor bis zum gewünschten Umsatz polymerisiert. Als Reaktoren kommen hier die aus der Styrolpolymerisation bekannten Turmreaktoren infrage, die als Reaktoren mit mehr oder minder ausgeprägter Pfropfenströmung angesehen werden können. Ebenfalls geeignet sind vollständig gefüllte (d.h. ohne Gasraum betriebene) Kreislaufreaktoren oder reine Rohrreaktoren. Die Polymerisationstemperatur beträgt hier z.B. zwischen 80 und 200°C.

Das am Ende der zweiten Reaktionszone noch nicht umgesetzte Monomere und das noch begleitende Lösungsmittel können in einem Lösungsmittelkreislauf, der dem ersten Kreislauf entspricht, entfernt werden. Üblicherweise werden sie aber in die dritte Reaktionszone mitgenommen, wo weiteres Styrol durch Polymerisation verschwindet und schließlich nur eine geringe Menge Lösungsmittel bzw. Drittlösungsmittel und eventuell etwas Styrol vom Polymeren in üblicher Weise durch die sog. Entgasung abgetrennc und vorteilhaft in die zweite Reaktionszone zurückgeführt werden. Es kann sinnvoll sein, die Brüden aufzutrennen und die Bestandteile verschiedenen vorgeschalteten Anlagenceilen zuzuführen, z.B. das Lösungsmittel der Kautschukherstellung.

Die mittlere Verweilzeit in den einzelnen Reaktoren beträgt beispielsweise 0,1 bis 3, vorteilhaft 0,2 bis 2 Stunden, wenn ein hinreichend langsam arbeitendes Initiatorsystem verwendet wird. Für die Polymerisation ausschließlich mit Lithiumalkylen kann die Verweilzeit auch deutlich geringer sein.

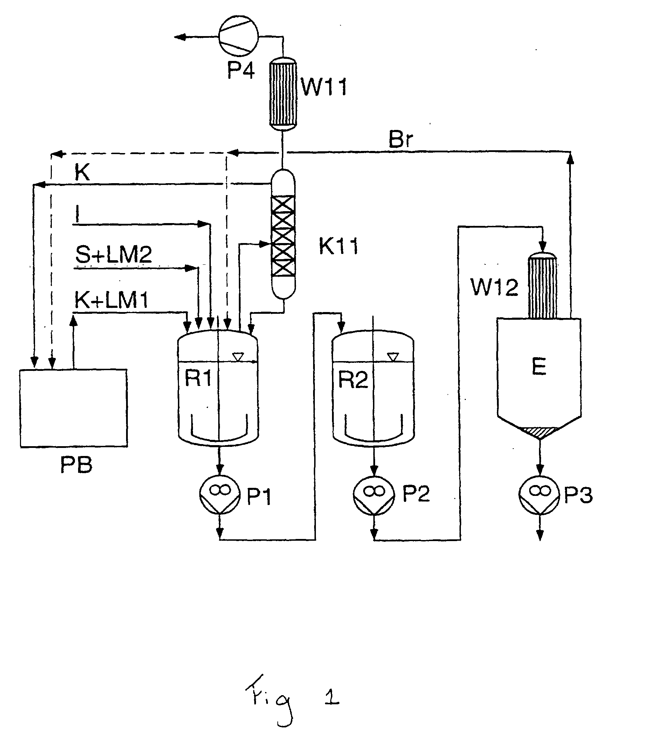

Das Verfahren wird im einzelnen durch die beigefügte Abbildung erläutert.

Die erste Reaktionszone ist nur schematisch angedeutet, da ihr Aufbau erfindungsgemäß weitgehend dem Stand der Technik entspricht.

Die zweite Reaktionszone besteht im wesentlichen aus einem Rührkessel R1 und einer Rektifikationskolonne K11 mit einem nachgeschalteten Kondensator (Wärmetauscher) W11.

In der zweiten Reaktionszone wird mindestens ein Styrolmonomer in Gegenwart des aus der ersten Reaktionszone zugeführten Kautschuks bzw. seiner Lösung im Drittlösungsmittel und gegebenenfalls einer geringen Menge eines hochsiedenden aromatischen Lösungsmittels (z.B. Ethylbenzol) bis zur Phaseninversion polymerisiert. Diese Reaktionszone dient somit der Einstellung der gewünschten Teilchen-Morphologie des Kautschuks (vgl. Echte, l.c.).

Zur Fraktionierung und Kondensation der Brüden dienen die erwähnte Kolonne K11 und der Wärmetauscher W11. Die Kolonne K11 soll so dimensioniert sein und betrieben werden, daß darin das nicht umgesetzte Styrol und das gegebenenfalls vorhandene hochsiedende aromatische Lösungsmittel zum überwiegenden Teil abgeschieden und unmittelbar in diese zweite Reaktionszone (nämlich den Reaktor R1) zurückgeführt werden, während das niedrigsiedende Lösungsmittel und wenn gewünscht, eventuell etwas Styrol in Dampfform verbleibt und dem Wärmetauscher W11 zur Kondensation zugeführt wird; bei der Kolonne K11 handelt es sich somit um ein Bauteil, das eine gewisse Fraktionierwirkung besitzen soll, was in üblicher Weise z.B. durch Einbauten, Füllkörper oder einfach entsprechende Baulänge erreicht wird. Die Menge an Styrol im niedrigsiedenden Lösungsmittel kann bis zu 70 Gew.-%, bevorzugt bis zu 50 Gew.-% bezogen auf die Gesamtmenge des eingesetzten Kautschuks betragen.

In W11 wird dann das niedrigsiedende Lösungsmittel weitgehend abgeschieden und - vielfach zweckmäßig - zunächst in einem Tank gesammelt, von wo aus es nach entsprechender Wiederaufbereitung (Reinigung und Trocknung), in die Kautschuksynthese zurückgeführt wird. Geringe Mengen an niedrigsiedendem Lösungsmittel können im Reaktionsgemisch der zweiten Reaktionszone verbleiben, d.h. sie können im Hinblick auf die nachfolgende Entgasungszone toleriert werden. Der Austrag aus der zweiten Reaktionszone wird i.a. in einer weiteren, dritten Reaktionszone zu Ende polymerisiert, bevor er in einem geeigneten Oberflächenverdampfer (Entgaser E) endgültig von niedermolekularen Bestandteilen befreit ("entgast") wird. Die dritte Reaktionszone besteht aus mindestens einem Reaktor mit überwiegender Pfropfenströmung (T1 in der Abbildung), in dem ein nahezu vollständiger Umsatz des Styrols erreicht werden kann. Als Reaktoren kommen z.B. gerührte Turmreaktoren oder hydraulisch gefüllte Rohrreaktoren in Frage.

Der Vorteil des erfindungsgemäßen Verfahrens besteht darin, daß man schlagzäh modifizierte Formmassen erzeugen kann, ohne daß der dazu benötigte Kautschuk in einem separacen Verfahrensschritt von seinem Lösungsmittel befreit werden muß.

Ein weiterer Vorteil ist die Möglichkeit, bestehende Anlagen, bei denen der benötigte Kautschuk bisher im Styrol gelöst werden mußte, mit relativ geringem Aufwand umzurüsten, d.h. eine Kautschukherstellung vorzuschalten und damit ihre Wirtschaftlichkeit erheblich zu verbessern.

Im folgenden wird die Herstellung von schlagzähem Polystyrol anhand der Abbildung genauer beschrieben. Die Herstellung des Kautschuks erfolgt kontinuierlich oder diskontinuierlich gemäß dem Stand der Technik.

In den Rührkessel R1 werden Styrol, das ggf. eine gewisse Menge Toluol und/oder Ethylbenzol enthält (Leitung S+LM₂), Kautschuklösung (Leitung K+LM₁)aus der vorgeschalteten Anlage PB und Initiatorlösung Leitung (I') gegeben und bei einer Temperatur von 60 bis 220°C, bevorzugt 70 bis 180°C polymerisiert. Wenn die einzuhaltende Temperatur unter dem Siedepunkt des Lösungsmittels (Kp_{1013hP}) liegen soll, muß zur Erzielung ausreichender Kühlung u.U. bei vermindertem Druck gearbeitet werden (Unterdruckpumpe P4). Ansonsten eignet sich atmosphärischer oder überatmosphärischer Druck, der auf die Siedepunkte von Styrol bzw. Lösungsmittel und die höchste vorgesehene Polymerisationstemperatur abgestimmt ist.

Die zugegebene Menge an Styrol soll mindestens der dreifachen Gewichtsmenge bezogen auf den Kautschuk betragen. Der Umsatz im Rührkessel R1 wird so gewählt, daß in dieser Reaktionszone die Phaseninversion stattfindet, bei der in bekannter Weise in der Polystyrolmatrix dispergierte Kautschukceilchen gebildet werden. Durch geeignete Wahl der Scherbedingungen kann die gewünschte Größe und Struktur der Kautschukteilchen eingestellt (vgl. Echte, loc. cit.).

Das in der aufgesetzten Kolonne (Siedekühler) K11 fraktionierte und im Wärmetauscher W11 abgeschiedene Drittlösungsmittel wird der Kautschuksynthese wieder zugeführt (Leitung K). Falls notwendig, wird eine Reinigung und Trocknung, z.B. durch Leiten über Aluminiumoxid oder Molekuarsieb zwischengeschaltet.

Das im Rührkessel R1 vorhandene Reaktionsgemisch wird kontinuierlich abgezogen (Pumpe P1) und in einem weiteren Rührkessel R2 bis zum gewünschten Umsatz polymerisiert, wobei die angestrebte thermoplastische Formmasse in Form einer (konzentrierten) schmelzeähnlichen Lösung erhalten wird. Wenn mit höherer Viskosität gerechnet werden muß, kann es sinnvoll sein, an Stelle des Rührkessels einen hydraulisch gefüllten Kreislaufreaktor, einen Turmreaktor oder einen Rohrreaktor mit statischen Einbauten einzusetzen: Für den Erfolg komme es nicht darauf an, ob der Reaktor R2 rückvermischend arbeitet, für eine Pfropfenströmung sorgt oder eine dazwischenliegende Mischungscharakteristik aufweist. Die in R2 anfallende Reaktionswärme kann, wenn es sich um einen Rührkessel handelt, natürlich ebenfalls durch Siedekühlung abgeführt werden. Dies kann insbesondere dann sinnvoll sein, wenn eine weitere Abreicherung des niedrig siedenden Lösungsmittels erreicht werden soll. Im übrigen sind alle technischen Lösungen geeignet, die in der Technik der herkömmlichen radikalischen Styrolpolymerisation eingeführt sind (z.B. Turmreaktoren mit Einbaukühlern, die zwischen die Rührerarme greifen; Kühlmäntel). Wenn der Reaktor R2 rückvermischend ist, muß, wenn ein vollständiger Umsatz erreicht werden soll, wie oben angegeben, noch eine Reaktionszone mit Pfropfenströmung folgen, wenn man den Umsatz vervollständigen will. Die lebenden Kettenenden der erzeugten Fadenmoleküle werden schließlich in bekannter Weise zerstört, durch Zugabe eines Abbruchmittels in einem nachgeschalteten Mischer.

Diese schließlich erhaltene Polymerlösung wird abgezogen (Pumpe P2) und in einer üblichen Vorrichtung (Extruder oder Vakuumapparat E, wie er gewöhnlich zur Entgasung von Polymeren verwendet wird) bei 190 bis 320°C entgast. Die abgezogenen Brüden Br bestehen im wesentlichen aus nicht umgesetztem Styrol und dem aromatischen Lösungsmittel, vorzugsweise nahezu ausschließlich aus Lösungsmittel. Die Brüden werden zweckmäßig kondensiert und können i.a. unmittelbar dem Reaktor R1 zugeführt werden.

Unter "Kautschuk" wird erfindungsgemäß mindestens ein Styrol-Butadien-Blockcopolymerisat z.B. mit linearem oder sternförmigem Aufbau mit statistischer oder geordneter Blockstruktur und mit scharfem oder verschmierten Blockübergängen verstanden. Beispielsweise sind Blockcopolymerisate vom Typ (A B)ₙ, A-B-A, B-A-B bzw. (A-B)ₘX, (B-A)ₘX, (A-B-A)ₘX, (B-A-)ₘX geeignet, wobei X den Rest eines multifunktionellen Kopplungsmittels darstellt und A einen Block aus Styrol und B einen Block aus einem Dien, n eine ganze Zahl von 1 bis 6 und m eine ganze Zahl von 2 bis 10 bedeutet. zusätzlich können reine Polydiene mitverwendet werden, soweit diese im gleichen Verfahren mit dem Blockcopolymerisat anfallen. Bevorzugt werden Gemische aus styrolarmen oder -freien Polydienen und Blockcopolymeren eingesetzt. Das Verhältnis der beiden Kautschuke hat Einfluß auf die erzielte Teilchengröße und -struktur.

Sowohl der Block A als auch der Block B können Butadien und Styrol in statistischer Verteilung enthalten. Bevorzugte Blockcopolymere sind solche aus Styrol, α-Methylstyrol, Butadien und Isopren. Die Glasübergangstemperaturen der dienhaltigen Segmente (Blöcke) des hergestellten Kautschuks sollten unter -20°C, insbesondere unter -40°C liegen.

Für die Initiierung der Polymerisation kann man mono- oder multifunktionelles Alkalimetallalkyl oder -aryl einsetzen. Aus den bekannten Gründen werden vornehmlich lithiumorganische Verbindungen eingesetzt. Beispielhaft genannt seien Ethyllithium, Propyllithium, Isopropyllithium, n- oder sec.-Butyllithium, t-Butyllithium, Phenyllithium, Hexyldiphenyllithium, Hexamethylendilithium sowie Butadienyllithium oder Isoprenyldilithium. Die Dosierung richtet sich nach dem angestrebten Molekulargewicht, liegt aber in der Regel im Bereich von 0,002 bis 5 Mol% bezogen auf die Monomeren.

Zur Absenkung der Reaktionsgeschwindigkeit und/oder zur Verbesserung der Temperaturstabilität der Polymerisationsprodukte kann Mg- oder Al-Alkyl oder deren Derivate und Mischungen mitverwendet werden.

Zur Zerstörung der lebenden Kettenenden nach Abschluß der Polymerisation eignen sich protonenaktive Substanzen oder LewisSäuren wie Wasser, Alkohole, aliphatische oder aromatische Carbonsäuren sowie schwache Mineralsäuren, z.B. Kohlensäure oder Borsäure.

Als Monomere für die Herstellung der schlagzähen thermoplastischen Formmassen eignen sich , wie eingangs gesagt, neben Styrol andere vinylaromatische Verbindungen. Z.B. können α-Methylstyrol, tert.-Butylstyrol, Vinylcoluol, p-Methylstyrol sowie Gemische der genannten Verbindungen anstelle von Styrol verwendet werden.

Als Hilfsmittel können - in der Regel nach dem Abschluß der Polymerisation - Gleitmittel, Stabilisatoren, Regler oder Entformungsmittel zugesetzt werden.

### Beispiele

### Die Polymerisationsanlage (vgl. Abb.)

Reaktionsraum R1 ist ein 30 Liter fassender, mit einem Ankerrührer ausgestatteter Rührkessel mit einer aufgesetzten Kolonne K11 und einem nachgeschalteten Abwärtskühler W11, wie in der Abbildung dargestellt. Das Reaktionsgemisch kann mittels einer Zahnradpumpe P1 aus R1 ausgetragen und in den Kessel R2 gefördert werden. R1 werden Kautschuklösung, das Lösungsmittel LM2, gegebenenfalls die bei der Entgasung anfallenden Brüden (Brüdenleitung Br), die benötigte Menge an Monomer (St) und Initiator zudosiert.

R2 ist wie R1 mit einem Ankerrührer ausgestattet und hat ein Volumen von 50 Liter. R2 kann wahlweise mit Siedekühlung (über eine in der Zeichnung nicht dargestellte Kolonne) oder mit Mantelkühlung betrieben werden. Nachgeschaltet ist eine Zahnradpumpe P2, von der das Reaktionsgemisch in üblicher Weise ausgetragen und einer Entgasungsvorrichtung E zugeführt werden kann Zur Entgasung dient ein Rohrbündelwärmetauscher, der auf einem evakuierbaren Topf sitzt. Soll vollständiger Umsatz des Styrols erreicht werden, so wird wahlweise ein R2 nachgeschalteter, 40 1 fassender Turmreaktor T1 (nicht in der Zeichnung enthalten) benutzt. Unmittelbar nach P2 oder gegebenenfalls T1 wird das Abbruchmittel durch eine 540 mm lange, mit einem DN32-SMXL-Mischer (Fabrikat Sulzer, Winterthur, Schweiz) bestückte Mischstrecke homogen eingemischt (nicht in der Zeichnung enthalten). Nach E ist eine weitere Zahnradpumpe P3 für den Produktaustrag vorgesehen, mit einer nachgeschalteten Düsenplatte und einer Granuliervorrichtung.

### Prüfungen:

Kerbschlagzähigkeit nach DIN 53453 an gekerbten Normkörpern. Streckspannung nach DIN 53 455 an Probekörpern nach ISO 3167.

### Beispiel 1

Es werden folgende Rohstoffe bereitgestellt:
- frisch destilliertes, wasserfreies technisches Monomerstyrol mit einem Ethylbenzolgehalt von 800 ppm;
- sek.-Butyllithium, 1,6-molar in n-Hexan/Cyclohexan (Volumenverhältnis 1:9), im Gewichtsverhältnis 1:4 mit Toluol verdünnt.
- Triisobutylaluminium, 6% gew.%-ig in Toluol
- Gemisch aus 10 Gew.-% Methanol und 90 Gew.-% Toluol zum Abbruch der Polymerisation (Entfernung der lebenden Kettenenden).

In den Rührkessel R1 wurden stündlich und kontinuierlich 7,4 kg Styrol, 4,8 kg einer auf 90°C vorerhitzten Lösung bestehend aus 0,8 kg eines Styrol/Butadien-Blockcopolymeren einer Molmasse von 220.000 g/mol und einem Styrolanteil von 25 Gew.-% und 4 kg Toluol, sowie Initiator dosiert. Als Initiator wurden 95 g/h s-BuLi-Lösung und 125 g/h der Triisobutylaluminiumlösung eingesetzt. Der Druck im Rührkessel wurde so eingestellt, daß sich eine Massetemperatur von 105°C einstellte. Über K11 wurden stündlich 2,2 kg eines Gemisches aus 91 Gew.-% Toluol und 9 Gew.-% Styrol abgezogen. Das stationär vorhandene Reaktionsgemisch hatte einen Feststoffgehalt von 30 Gew.-%; es wurde in den Rührkessel R2 überführt und bei 110°C bis zu einem Feststoffgehalt von 55 Gew.-%, danach in T1 bei 150°C bis zu vollständigem Umsatz polymerisiert. Dem Austrag wurde über den Mischer 200 g/h Methanol-Toluol-Gemisch zugesetzt, im Wärmetauscher W21 auf 250°C erhitzt und zur Abtrennung der flüchtigen Bestandteile in einen evakuierten Behälter entspannt. 5 Gew.-% der kondensierten Brüden wurden aus dem Kreislauf ausgeschleust, um eine Aufpegelung des mitgebrachten Ethylbenzols zu verhindern. Die Schmelze wurde mit einer Zahnradpumpe ausgetragen und granuliert. Es wurde eine Kerbschlagzähigkeit von 6,1 kJ/m² und eine Streckspannung von 32 MPa gemessen.

### Beispiel 2

In den Rührkessel R1 wurden stündlich und kontinuierlich 7,4 kg Styrol, 4,8 kg einer auf 60°C erwärmten Lösung aus 0,8 kg eines Styrol/Butadien-Blockcopolymeren mit einer Molmasse von 228.000 g/mol und einem Styrolanteil von 25 Gew.-%, 4 kg Cyclohexan, die gesamten rückgeführten Brüden (2,2 kg/h Ethylbenzol neben kleinen Mengen anderer Kohlenwasserstoffe) sowie Initiator dosiert. Als Initiator wurden 95 g/h der s-BuLi-Lösung und 125 g/h der Triisobutylaluminiumlösung aus Beispiel 1 eingesetzt. Aus der Kesselgröße und der sich ergebenden Verweilzeit ergab sich ein stationärer Feststoffgehalt von 31 Gew.-%. Der Druck im Rührkessel würde so eingestellt, daß sich unter Sieden eine Temperatur von 105°C einstellte. Über den Kopf der Kolonne wurden 4,1 kg/h Lösungsmitteldampf abgezogen und der Kautschukherstellung zugeführt. Der Dampf enthielt neben Cyclohexan noch kleine Mengen an Toluol. Das Reaktionsgemisch wurde in den Rührkessel R2 ausgetragen, wo bei 110°C bis zu einem Feststoffgehalt von 55 Gew.-% polymerisiert wurde. Im Turmreaktor wurde bei 150°C bis zu vollständigem Umsatz polymerisiert. Dem Austrag wurde 200 g/h Methanol-Ethylbenzol-Gemisch zugesetzt, auf 250°C erhitzt und entspannt. 5 Gew.-% der kondensierten Brüden wurden ausgeschleust. Die Schmelze wurde durch eine Zahnradpumpe ausgetragen und granuliert. Die Kerbschlagzähigkeit betrug 6,8 kJ/m², die Streckspannung 31 MPa.

## Patentansprüche

1. Kontinuierlich durchführbares Verfahren zur Herstellung von schlagzäh modifizierten Styrolpolymeren (HIPS), die einen teilchenförmigen, durch Pfropfung mit Styrol verträglich gemachten Polybutadienkautschuk oder ein Styrol-Bucadien-Blockcopolymerisat als disperse Phase in einer Polystyrolmatrix enthalten, durch anionische Polymerisation von Styrol in einem oder mehreren hintereinandergeschalteten Polymerisationsreaktoren in Gegenwart eines in einem unmittelbar vorgeschalteten Verfahren hergestellten Kautschuks, gegebenenfalls in Gegenwart einer untergeordneten Menge Ethylbenzol, **dadurch gekennzeichnet, daß**
a) der Kautschuk als Lösung in einem von Styrol und gegebenenfalls Ethylbenzol verschiedenen Drittlösungsmittel zugeführt wird, das einen niedrigeren Siedepunkt als Styrol bzw. Ethylbenzol aufweist und wenigstens ein Lösungsmittelkreislauf vorgesehen ist, indem das Drittlösungsmittel unter Ausnutzung der Polymerisationswärme aus mindestens einem der Polymerisationsreaktoren durch Destillation unter Siedekühlung entfernt und - mittelbar oder unmittelbar - in das Verfahren zur Kautschukherstellung zurückgeführt wird und
b) in an sich bekannter Weise das gebildete schlagzähe Polystyrol vom gegebenenfalls verbliebenen restlichen Styrol, dem begleitenden Ethylbenzol und weiteren Begleitstoffen durch Wärmebehandlung unter vermindertem Druck befreit, und der gebildete Brüdenstrom kondensiert und gegebenenfalls in einem weiteren Lösungsmittelkreislauf ebenfalls zurückgeführt wird.

2. Verfahren nach Anspruch 1, **dadurch gekennzeichnet, daß** als Drittlösungsmittel für die Herstellung des Kautschuks ein aliphatischer, cycloaliphatischer oder aromatischer Kohlenwasserstoff mit 4 bis etwa 8 Kohlenstoffatomen oder ein Gemisch solcher Kohlenwasserstoffe mit einer Siedetemperatur (KP_{1013hP}) von unter 130°C eingesetzt wird.

3. Verfahren nach Anspruch 2, **dadurch gekennzeichnet, daß** für die Kautschukherstellung ein Lösungsmittel mit einer Siedetemperatur (KP_{1013hP}) unter 120°C eingesetzt wird.

4. Verfahren nach Anspruch 1, **dadurch gekennzeichnet, daß** es bei einem von atmosphärischem Druck verschiedenen Druck durchgeführt.

5. Verfahren nach Anspruch 1, **dadurch gekennzeichnet, daß** bei der Styrolpolymerisation außer Styrol kein weiteres, bei atmosphärischem Druck über 130°C siedendes Lösungsmittel verwendet wird.

6. Verfahren nach Anspruch 2, **dadurch gekennzeichnet daß** auch der zweite Kreisstrom (die Brüden) mindestens teilweise in das vorgeschaltete Verfahren zur Herstellung des Kautschuks zurückgeführt wird.

7. Verfahren nach Anspruch 1, **dadurch gekennzeichnet daß** als Kautschuk ein kontinuierlich oder diskontinuierlich hergestellter Styrol/Butadienkautschuk oder ein SB-Blockkautschuk verwendet wird.

8. Verfahren nach Anspruch 1, **dadurch gekennzeichnet daß** der erste Reaktor als Rührkessel ausgebildet ist und das durch die Polymerisationswärme verdampfende Monomer/Lösungsmittelgemisch einer dem Reaktor zugeordneten Rektifikationskolonne mit Rückflußkühler zugeführt wird.

9. Verfahren nach Anspruch 8, **dadurch gekennzeichnet daß** die Rektifikationskolonne auf den Reaktor aufgesetzt oder nachgeschaltet ist.

10. Verfahren nach Anspruch 8, **dadurch gekennzeichnet daß** das Lösungsmittel am Kopf der Rektifikationskolonne abgezogen und der Kautschukherstellung zugeführt, und der Sumpf in den Reaktor zurückgeführt wird.

11. Verfahren nach Anspruch 8, **dadurch gekennzeichnet daß** ein zweiter, ebenfalls als Rührkessel ausgebildeter und mit einer zugeordneten Destillationseinrichtung versehener Reaktor.vorgesehen ist.

12. Verfahren nach Anspruch 11, **dadurch gekennzeichnet daß** in dem zweiten Reaktor nicht umgesetztes Styrol, gegebenenfalls gemeinsam mit dem Drittlösungsmittel abdestilliert, gegebenenfalls fraktioniert sowie an der jeweils infragekommenden Stelle des Verfahrensablaufs wieder eingesetzt werden.

13. Verfahren nach Anspruch 8, **dadurch gekennzeichnet daß** der Reaktor und/oder die Zuläufe zusätzlich beheizt werden.

14. Verfahren nach Anspruch 1, **dadurch gekennzeichnet daß** anstelle von Styrol bzw. Butadien die üblichen jeweiligen technischen Äquivalente wie 2-, 3- oder 4-Methylstyrol, tert.-Butylstyrol, Ethylstyrol oder α-Methylstyrol bzw. Isopren, Dimethylbutadien, Pentadien-1,3 oder Hexadien-1,3 eingesetzt werden.

## Claims

1. A continuous process for preparing impact-modified styrene polymers (HIPS) which comprise, as disperse phase in a polystyrene matrix, a styrene-butadiene block copolymer or a particulate polybutadiene rubber compatibilized by grafting with styrene, by anionic polymerization of styrene in a polymerization reactor, or in more than one polymerization reactor arranged in sequence, in the presence of a rubber prepared in an immediately prior process, and if desired in the presence of a subordinate amount of ethylbenzene, which comprises
a) introducing the rubber in the form of a solution in a third solvent which is neither styrene nor, if present, ethylbenzene and which has a boiling point lower than those of styrene and, if present, ethylbenzene, and providing at least one circulating system of solvent by utilizing the heat of polymerization to remove the third solvent from at least one of the polymerization reactors via distillation with evaporative cooling and, directly or indirectly, reintroducing the same into the rubber preparation process, and
b) in a manner known per se, freeing the resultant impact-modified polystyrene from any remaining styrene residues, and from the associated ethylbenzene and other minor components, by heat treatment under reduced pressure, and condensing the resultant stream of vapors, and, if desired, reintroducing the same in another circulating system of solvent.

2. A process as claimed in claim 1, wherein the third solvent used for preparing the rubber is an aliphatic, cycloaliphatic or aromatic hydrocarbon having from 4 to about 8 carbon atoms or a mixture of such hydrocarbons having a boiling point (b.p._{1013hP}) below 130°C.

3. A process as claimed in claim 2, wherein the solvent used for the rubber preparation has a boiling point (b.p._{1013hP}) below 120°C.

4. A process as claimed in claim 1, which is carried out at a pressure other than atmospheric pressure.

5. A process as claimed in claim 1, wherein no use is made in the styrene polymerization of any other solvent which is not styrene and which has a boiling point of above 130°C at atmospheric pressure.

6. A process as claimed in claim 2, wherein the second circulating stream (the vapors) is also, at least to some extent, reintroduced into the upstream process for preparing the rubber.

7. A process as claimed in claim 1, wherein the rubber used is an SB block rubber or a styrene-butadiene rubber prepared continuously or batchwise.

8. A process as claimed in claim 1, wherein the first reactor is a stirred reactor and the monomer/solvent mixture which evaporates as a result of the heat of polymerization is introduced to a rectification column allocated to the reactor and having a reflux condenser.

9. A process as claimed in claim 8, wherein the rectification column is placed upon the reactor or is situated downstream.

10. A process as claimed in claim 8, wherein the solvent is drawn off from the rectification column as overhead product and introduced to the rubber preparation, and the bottom product is reintroduced into the reactor.

11. A process as claimed in claim 8, wherein there is provision of a second reactor which is likewise a stirred reactor and to which distillation equipment is allocated.

12. A process as claimed in claim 11, wherein in the second reactor unconverted styrene together if desired with the third solvent are distilled off, fractionated if desired, and used again at the respective relevant point in the course of the process.

13. A process as claimed in claim 8, wherein the reactor and/or the feeds are additionally heated.

14. A process as claimed in claim 1, wherein, instead of styrene and/or butadiene, use is made in each case of the usual technical equivalents, such as 2-, 3- or 4-methylstyrene, tert-butylstyrene, ethylstyrene or α-methylstyrene, and isoprene, dimethylbutadiene, 1,3-pentadiene or 1,3-hexadiene.

## Revendications

1. Procédé qui peut être mis en oeuvre en continu pour la préparation de polymères de styrène modifiés quant à la résistance au choc (HIPS), qui contiennent un caoutchouc de polybutadiène sous forme particulaire et rendu compatible avec du styrène par greffage ou un copolymère bloc de styrène-butadiène sous la forme d'une phase dispersée dans une matrice de polystyrène, par polymérisation anionique de styrène dans un ou plusieurs réacteurs de polymérisation montés à la suite l'un de l'autre, en présence d'un caoutchouc préparé dans un procédé directement prévu en amont, éventuellement en présence d'une quantité minime d'éthylbenzène, **caractérisé en ce que**
a) le caoutchouc est amené sous la forme d'une solution dans un tiers-solvant différent du styrène et éventuellement de l'éthylbenzène, qui présente un point d'ébullition plus faible que le styrène ou respectivement l'éthylbenzène, et au moins un circuit de solvant est prévu, le tiers-solvant étant, par exploitation de la chaleur de polymérisation, éliminé d'au moins un des réacteurs de polymérisation par distillation en dessous du refroidissement par évaporation et étant ramené, directement ou indirectement, dans le procédé de préparation de caoutchouc, et
b) d'une manière connue en soi le polystyrène résistant au choc formé est libéré, par traitement thermique sous pression réduite, du styrène résiduel subsistant éventuellement, de l'éthylbenzène qui accompagne et d'autres impuretés, et le courant de buées formé est condensé et éventuellement également ramené dans un autre circuit de solvant.

2. Procédé suivant la revendication 1, **caractérisé en ce que**, comme tiers-solvant pour la préparation du caoutchouc, on met en oeuvre un hydrocarbure aliphatique, cycloaliphatique ou aromatique, comportant 4 jusqu'à environ 8 atomes de carbone, ou un mélange de tels hydrocarbures ayant une température d'ébullition (PE_{1013hP}) inférieure à 130°C.

3. Procédé suivant la revendication 2, **caractérisé en ce que**, pour la préparation du caoutchouc, on met en oeuvre un solvant ayant une température d'ébullition (PE_{1013hP}) inférieure à 120°C.

4. Procédé suivant la revendication 1, **caractérisé en ce qu'**il est effectué à une pression différente de la pression atmosphérique.

5. Procédé suivant la revendication 1, **caractérisé en ce que**, lors de la polymérisation de styrène, hormis le styrène, on n'utilise aucun autre solvant bouillant à plus de 130°C à la pression atmosphérique.

6. Procédé suivant la revendication 2, **caractérisé en ce que** le deuxième circuit (les buées) est également recyclé au moins partiellement dans le procédé situé en amont pour la préparation du caoutchouc.

7. Procédé suivant la revendication 1, **caractérisé en ce que**, comme caoutchouc, on utilise un caoutchouc de styrène/butadiène préparé de manière continue ou discontinue ou un caoutchouc de blocs SB.

8. Procédé suivant la revendication 1, **caractérisé en ce que** le premier réacteur est réalisé sous la forme d'une cuve d'agitation et **en ce que** le mélange de monomère/solvant qui s'évapore par la chaleur de polymérisation est amené à une colonne de rectification pourvue d'un réfrigérant à reflux et adjointe au réacteur.

9. Procédé suivant la revendication 8, **caractérisé en ce que** la colonne de rectification est montée sur le réacteur ou en aval de celui-ci.

10. Procédé suivant la revendication 8, **caractérisé en ce que** le solvant est soutiré à la tête de la colonne de rectification et est amené à la préparation de caoutchouc et **en ce que** le produit de fond de cuve est recyclé dans le réacteur.

11. Procédé suivant la revendication 8, **caractérisé en ce qu'**un deuxième réacteur, également réalisé sous la forme d'une cuve d'agitation et pourvu d'un dispositif de distillation adjoint, est prévu.

12. Procédé suivant la revendication 11, **caractérisé en ce que**, dans le deuxième réacteur, du styrène n'ayant pas réagi, éventuellement conjointement avec le tiers-solvant, est séparé par distillation, éventuellement soumis à un fractionnement, ainsi qu'à nouveau mis en oeuvre à l'emplacement respectivement en question du déroulement du procédé.

13. Procédé suivant la revendication 8, **caractérisé en ce que** le réacteur et/ou les amenées sont en supplément chauffés.

14. Procédé suivant la revendication 1, **caractérisé en ce que**, au lieu de styrène et respectivement de butadiène, on met en oeuvre les équivalents techniques respectifs courants, tels que du 2-, 3-ou 4-méthylstyrène, du tert-butylstyrène, de l'éthylstyrène ou de l'α-méthylstyrène et respectivement de l'isoprène, du diméthylbutadiène, du pentadiène-1,3 ou de l'hexadiène-1,3.
